# EUROPÄISCHE PATENTSCHRIFT

(11) **EP 2 613 953 B1**
(45) Veröffentlichungstag und Bekanntmachung des Hinweises auf die Patenterteilung: **06.04.2016**
(21) Anmeldenummer: 11754874.3
(22) Anmeldetag: 09.09.2011
(51) Int. Cl.: B60J 7/00, B60J 1/20

(54) **SCHATTIERUNGSEINRICHTUNG FÜR EINE VERGLASTE FAHRZEUGÖFFNUNG**
SHADING DEVICE FOR A GLAZED WINDOW OPENING
DISPOSITIF D'OMBRAGE POUR UNE OUVERTURE VITRÉE DE VÉHICULE

(30) Priorität: 10.09.2010 DE 102010040603
(43) Veröffentlichungstag der Anmeldung: 17.07.2013
(73) Patentinhaber: Deere & Company, Moline, IL 61265 (US); AKO-Kunststoffe Alfred Kolb GmbH, 74889 Sinsheim-Hoffenheim (DE)
(72) Erfinder: BOCH, Martin, 68163 Mannheim (DE); MÜLLER, Harald, 68723 Oftersheim (DE); WAGNER, Alexander, 75031 Eppingen / Rohrbach (DE)
(74) Vertreter: John Deere GmbH & Co. KG
(86) Internationale Anmeldenummer: PCT/EP2011/065657
(87) Internationale Veröffentlichungsnummer: WO 2012/032160

(56) Entgegenhaltungen:
- DE-A1- 4 320 393
- DE-A1-102008 028 861

## Beschreibung

Die Erfindung betrifft eine Schattierungseinrichtung für eine verglaste Fahrzeugöffnung, mit einem in gegenüberliegenden Gleitschienen geführten Auszugsstab sowie einem an dem Auszugsstab angebrachten Schattierungselement, das durch Verschieben des Auszugsstabs entlang der Gleitschienen zwischen einer zurückgezogenen Position und einer ausgezogenen Position verstellbar ist.

Eine derartige Schattierungseinrichtung in Gestalt eines Sonnenschutzrollos für ein Fahrzeug wird beispielsweise in der DE 20 2007 018 180 U1 erwähnt. Das bekannte Sonnenschutzrollo umfasst einen in gegenüberliegenden Gleitschienen geführten Auszugsstab in Gestalt eines Zugspriegels, an dem ein als Rollobahn ausgebildetes Schattierungselement angebracht ist. Die Rollobahn ist auf eine entgegen einer Auszugsrichtung vorgespannte Wickelwelle aufgespult. Um das Sonnenschutzrollo in einer bestimmten ausgezogenen Position arretieren zu können, sind die zwischen dem Auszugsstab und den Gleitschienen wirkenden Reibungskräfte derart zu bemessen, dass diese stets größer sind als die von der vorgespannten Wickelwelle über die Rollobahn auf den Auszugsstab ausgeübte Rückstellkraft. Verschleißbedingt nehmen die Reibungskräfte zwischen Auszugsstab und Gleitschienen jedoch mit der Zeit ab, sodass eine verlässliche Arretierung gerade bei Auftreten fahrtbedingter Erschütterungen nicht mehr sichergestellt werden kann. Des Weiteren neigt der Auszugsstab bei unachtsamer Betätigung dazu, in den Gleitschienen zu verkanten und im ungünstigsten Fall aus diesen herauszuspringen.

Die DE 102008 028 861 A1 zeigt ein handbetätigtes Sonnenschutzrollo für ein Fahrzeug mit einer aufwickelbaren Rollobahn mit einem Zugspriegel und einer Antriebsvorrichtung. Die Antriebsvorrichtung weist eine Antriebswelle auf, die an dem Zugspriegel gelagert ist und an ihren beiden Endabschnitten jeweils drehfest mit einem Antriebsrad gekoppelt ist.

Es ist daher Aufgabe der vorliegenden Erfindung, eine bezüglich ihrer Brauchbarkeit und Handhabung verbesserte Schattierungseinrichtung der eingangs genannten Art anzugeben.

Es ist daher Aufgabe der vorliegenden Erfindung, eine bezüglich ihrer Brauchbarkeit und Handhabung verbesserte Schattierungseinrichtung der eingangs genannten Art anzugeben.

Diese Aufgabe wird durch eine Schattierungseinrichtung mit den Merkmalen des Patentanspruchs 1 gelöst.

Die Schattierungseinrichtung für eine verglaste Fahrzeugöffnung umfasst einen in gegenüberliegenden Gleitschienen geführten Auszugsstab sowie ein an dem Auszugsstab angebrachtes Schattierungselement, das durch Verschieben des Auszugsstabs entlang der Gleitschienen zwischen einer zurückgezogenen Position und einer ausgezogenen Position verstellbar ist. Erfindungsgemäß weist der Auszugsstab zumindest einen Zahnradantrieb mit an gegenüberliegenden Enden des Auszugsstabs angeordneten Zahnrädern auf, die jeweils mit einer entlang der Gleitschienen ausgebildeten Verzahnung kämmen, wobei die Zahnräder drehfest miteinander verbunden sind. Zudem weist der Auszugsstab einen ersten Zahnradantrieb und einen in Verstellrichtung des Auszugsstabs beabstandet angeordneten zweiten Zahnradantrieb auf.

Bei der verglasten Fahrzeugöffnung kann es sich insbesondere um ein Glasschiebedach oder eine beliebige andere Fahrzeugscheibe, beispielsweise um eine in einer Fahrerkabine eines landwirtschaftlichen Nutzfahrzeugs vorgesehene Seitenscheibe handeln. Dementsprechend weisen die Gleitschienen in montiertem Zustand einen der Orientierung des Glasschiebedachs bzw. der Fahrzeugscheibe entsprechenden horizontalen bzw. vertikalen Verlauf auf. Die Gleitschienen können entweder offen im Randbereich der verglasten Fahrzeugöffnung montiert oder aber durch eine die verglaste Fahrzeugöffnung umgebende Innenraumverkleidung verdeckt sein.

Es sei an dieser Stelle angemerkt, dass die Verwendung der erfindungsgemäßen Schattierungseinrichtung nicht auf verglaste Fahrzeugöffnungen beschränkt ist, sondern vielmehr auch ein Einsatz als Kofferraumabdeckung oder dergleichen vorstellbar ist.

Da die Zahnräder des zumindest einen Zahnradantriebs drehfest miteinander verbunden sind, lässt sich ein unerwünschtes Verkanten des Auszugsstabs in den Gleitschienen weitgehend ausschließen. Durch Blockieren einer Drehung der Zahnräder wird zudem eine von den zwischen dem Auszugsstab und den Gleitschienen wirkenden Reibungskräften unabhängige Arretierung der Schattierungseinrichtung ermöglicht.

Vorteilhafte Weiterbildungen der erfindungsgemäßen Schattierungseinrichtung gehen aus den Unteransprüchen hervor.

Vorzugsweise sind die Zahnräder des zumindest einen Zahnradantriebs über eine in dem Auszugsstab verlaufende durchgehende Antriebswelle drehfest miteinander verbunden. Die Zahnräder können hierbei in einem Endbereich der aus einer geeigneten Stahllegierung hergestellten Antriebswelle aufgesteckt und mittels zugehöriger Splinte gesichert sein.

Des Weiteren besteht die Möglichkeit, dass die Verzahnung entlang einer Innenkante einer von der Gleitschiene umfassten Führungsnut verläuft. Die Verzahnung kann hierbei einstückiger Bestandteil der Innenkante der Führungsnut sein und sich als solche über den gesamten Verstellbereich des Auszugsstabs erstrecken. Eine der Verzahnung gegenüberliegende Innenkante der Führungsnut weist einen glatten Verlauf auf und bildet insofern ein Gegenlager für das in der Führungsnut abrollende Zahnrad. Sowohl die Gleitschiene als auch die darin geführten Zahnräder können aus einem geeigneten Kunststoff hergestellt sein, wobei sich zur Erzielung eines geräusch- und reibungsarmen Laufs die Verwendung von Nylon oder eines anderen selbstschmierenden Kunststoffmaterials anbietet.

Die Schattierungseinrichtung ist beispielsweise als Sonnenschutzrollo ausgebildet. Das Sonnenschutzrollo kann eine jalousienartige Anordnung flexibel aneinander gereihter Lamellen aufweisen, die gemeinsam mit dem Auszugsstab in den Gleitschienen geführt sind. Es ist jedoch auch eine Anordnung vorstellbar, bei der das Sonnenschutzrollo eine textile Stoffbahn sowie eine entgegen einer Auszugsrichtung vorgespannte Wickelwelle zum selbsttätigen Aufrollen der textilen Stoffbahn aufweist. Bei der textilen Stoffbahn handelt es sich im Allgemeinen um ein lichtdichtes oder lichtdicht beschichtetes Kunststoffgewebe. Abweichend davon kann die textile Stoffbahn auch aus einem teilweise lichtdurchlässigen Kunststoffnetzgewebe oder dergleichen hergestellt sein.

Darüber hinaus ist es möglich, dass eine von Hand lösbare Feststelleinrichtung zur Arretierung des zumindest einen Zahnradantriebs und damit des in den Gleitschienen geführten Auszugsstabs vorhanden ist. Die Feststelleinrichtung weist insbesondere ein auf der Antriebswelle des zumindest einen Zahnradantriebs drehfest angebrachtes Stirnrad sowie eine entlang der Antriebswelle verschiebbare Arretierhülse auf, wobei die Antriebswelle drehbar durch die Arretierhülse hindurchgeführt ist. Letztere umfasst eine stirnseitige Verzahnung, die komplementär zur Verzahnung des Stirnrads ausgebildet ist und unter der Wirkung einer mittels einer Druckfeder aufgebrachten Vorspannkraft mit der Verzahnung des Stirnrads derart in Eingriff steht, dass eine Drehung des Stirnrads und damit der Antriebswelle blockiert wird. Ein der Arretierhülse zugeordnetes Betätigungselement ermöglicht es, die Arretierhülse zum Lösen der Feststelleinrichtung entgegen der Vorspannkraft der Druckfeder von Hand auszulenken und so die stirnseitige Verzahnung der Arretierhülse außer Eingriff mit der Verzahnung des Stirnrads zu bringen. In diesem Fall wird eine Drehung des Stirnrads und damit der Antriebswelle freigegeben, sodass sich der Auszugsstab ungehindert entlang der Gleitschienen verschieben lässt.

Um eine Beschädigung der Feststelleinrichtung oder des zumindest einen Zahnradantriebs bei dem Versuch, die Auszugsstange in arretiertem Zustand zu verschieben, zu vermeiden, ist die Feststelleinrichtung vorzugsweise als durchrastende Sicherheitskupplung ausgebildet. Zu diesem Zweck kann die Verzahnung des stirnseitigen Bereichs der Arretierhülse derart geformt sein, dass diese bei Überschreiten eines durch die Vorspannkraft der Druckfeder gegebenen Ausrückmoments aus der Verzahnung des Stirnrads gehoben wird und dabei eine Drehung der Antriebswelle freigibt. Die erfindungsgemäße Schattierungseinrichtung wird im Folgenden anhand der beigefügten beispielhaften Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Innenansicht einer beispielhaften Ausführungsform der erfindungsgemäßen Schattierungseinrichtung,
- Fig. 2: eine perspektivische Außenansicht der in Fig. 1 dargestellten erfindungsgemäßen Schattierungseinrichtung,
- Fig. 3: eine Detailansicht eines Zahnradantriebs der in Fig. 1 dargestellten erfindungsgemäßen Schattierungseinrichtung, und
- Fig. 4: eine Detailansicht einer Feststelleinrichtung zur Arretierung des in Fig. 3 dargestellten Zahnradantriebs.

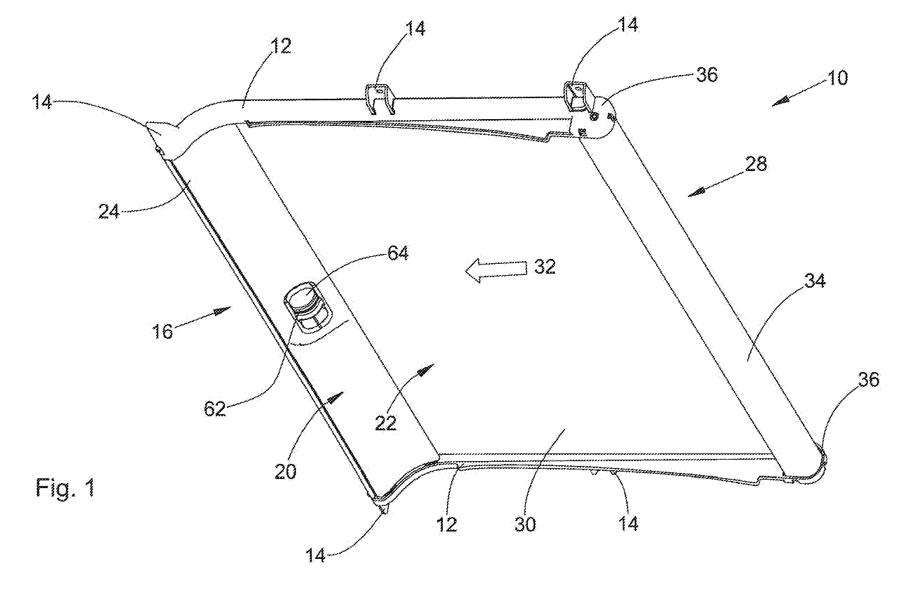

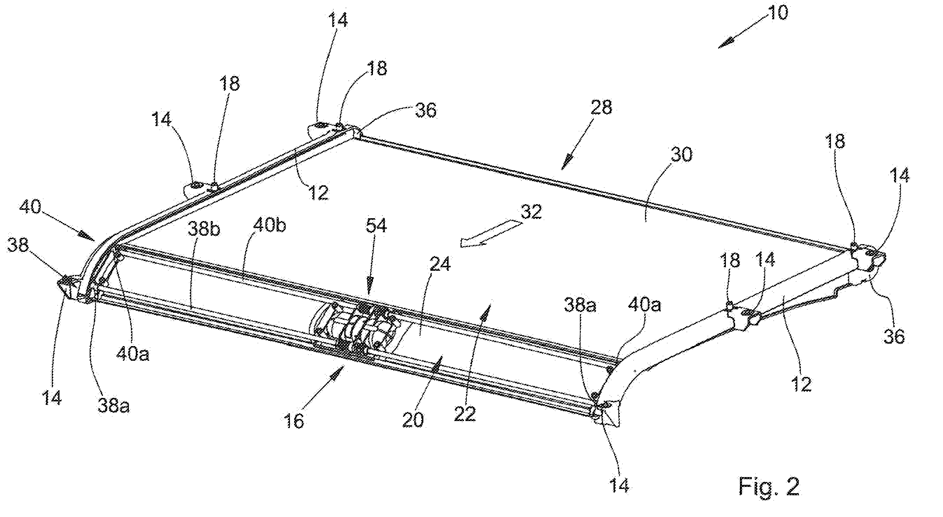

Fig. 1 zeigt eine perspektivische Innenansicht einer beispielhaften Ausführungsform der erfindungsgemäßen Schattierungseinrichtung für eine verglaste Fahrzeugöffnung, während Fig. 2 eine perspektivische Außenansicht der in Fig. 1 dargestellten erfindungsgemäßen Schattierungseinrichtung wiedergibt.

Die Schattierungseinrichtung 10 umfasst ein Paar gegenüberliegend angeordnete Gleitschienen 12, die sich mittels zugehöriger Befestigungsschenkel 14 im Randbereich einer verglasten Fahrzeugöffnung, im vorliegenden Fall eines nicht dargestellten Glasschiebedachs eines landwirtschaftlichen Nutzfahrzeugs, anschrauben lassen. Beispielsgemäß weisen die Gleitschienen 12 in einem vorderen Bereich 16 einen dem Glasschiebedach angepassten gekrümmten Verlauf auf. Mehrere stiftförmige Vorsprünge 18 im Bereich der Befestigungsschenkel 14 dienen als Positionierhilfen bei der Montage der Schattierungseinrichtung 10 im Fahrzeug.

Des Weiteren ist ein in den Gleitschienen 12 geführter Auszugsstab 20 sowie ein an dem Auszugsstab 20 angebrachtes Schattierungselement 22 vorgesehen, das durch Verschieben des Auszugsstabs 20 entlang der Gleitschienen 12 zwischen einer zurückgezogenen Position und einer in Fig. 1 und 2 dargestellten (vollständig) ausgezogenen Position verstellbar ist. Genauer gesagt umfasst der Auszugsstab 20 ein inneres, dem gekrümmten Verlauf der Gleitschienen 12 angepasstes Basisteil 24 sowie ein mittels zugehöriger Schrauben 26 an dem Basisteil 24 anbringbares Deckelteil. Das Deckelteil ist aus Gründen der Übersichtlichkeit nicht dargestellt.

Die Schattierungseinrichtung 10 ist im vorliegenden Fall als Sonnenschutzrollo 28 ausgebildet. Das Sonnenschutzrollo 28 weist eine textile Stoffbahn 30 sowie eine entgegen einer Auszugsrichtung 32 vorgespannte Wickelwelle 34 zum selbsttätigen Aufrollen der textilen Stoffbahn 30 auf. Die Wickelwelle 34 ist an ihren Enden jeweils an einem an den Gleitschienen 12 ausgeformten Befestigungsflansch 36 angebracht. Bei der textilen Stoffbahn 30 handelt es sich um ein lichtdichtes oder lichtdicht beschichtetes Kunststoffgewebe. Abweichend davon kann die textile Stoffbahn 30 auch aus einem teilweise lichtdurchlässigen Kunststoffnetzgewebe oder dergleichen hergestellt sein.

Der Auszugsstab 20 weist einen ersten und zweiten Zahnradantrieb 38 und 40 auf. Jeder der beiden Zahnradantriebe 38 bzw. 40 umfasst an gegenüberliegenden Enden angeordnete Zahnräder 38a bzw. 40a, die jeweils mit einer entlang der Gleitschienen 12 ausgebildeten Verzahnung 42 kämmen, wobei die Zahnräder 38a bzw. 40a drehfest über eine in dem Auszugsstab 20 verlaufende durchgehende Antriebswelle 38b bzw. 40b miteinander verbunden sind. Mit anderen Worten ist ein die Zahnräder 38a umfassendes erstes Zahnradpaar mittels einer ersten Antriebswelle 38b und ein die Zahnräder 40a umfassendes zweites Zahnradpaar mittels einer zweiten Antriebswelle 40b drehfest miteinander verbunden, wobei die beiden Antriebswellen 38b und 40b parallel in vorgegebenem Abstand zueinander in dem Auszugsstab 20 verlaufen.

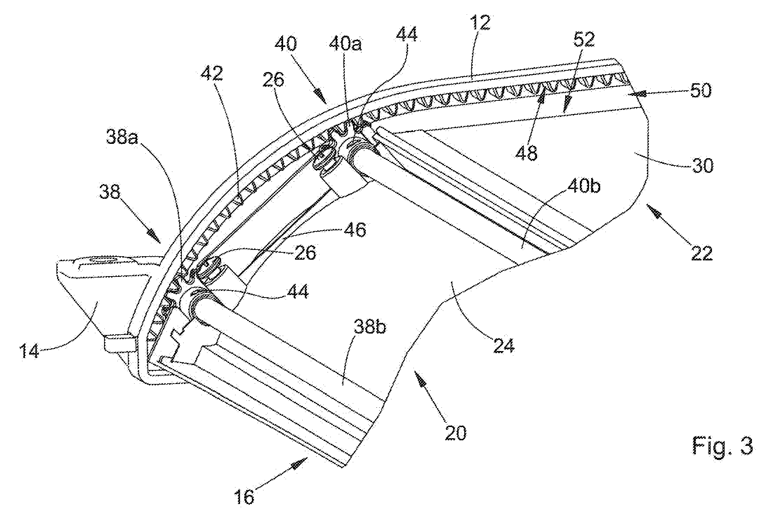

Der genaue Aufbau des Zahnradantriebs 38 bzw. 40 lässt sich der Detailansicht in Fig. 3 entnehmen. Demgemäß sind die Zahnräder 38a bzw. 40a in einem Endbereich der aus einer geeigneten Stahllegierung hergestellten Antriebswellen 38b bzw. 40b aufgesteckt und mittels zugehöriger Splinte 44 gesichert. Ein einstückig an der Innenseite des Basisteils 24 ausgeformter Vorsprung 46 dient der drehbaren Lagerung der Antriebswellen 38b und 40b bzw. der an diesen angebrachten Zahnräder 38a und 40a. Eine vergleichbare Anordnung ist ebenfalls an der gegenüberliegenden Seite des Auszugsstabs 20 vorgesehen.

Beispielsgemäß verläuft die Verzahnung 42 entlang einer Innenkante 48 einer von den Gleitschienen 12 umfassten Führungsnut 50. Die Verzahnung 42 ist hierbei einstückiger Bestandteil der Innenkante 48 der Führungsnut 50 und erstreckt sich als solche über den gesamten Verstellbereich des Auszugsstabs 20. Eine der Verzahnung 42 gegenüberliegende Innenkante 52 der Führungsnut 50 weist einen glatten Verlauf auf und bildet insofern ein Gegenlager für die in der Führungsnut 50 abrollenden Zahnräder 38a und 40a. Sowohl die Gleitschienen 12 als auch die darin geführten Zahnräder 38a und 40a sind aus Nylon oder einem anderen selbstschmierenden Kunststoffmaterial hergestellt.

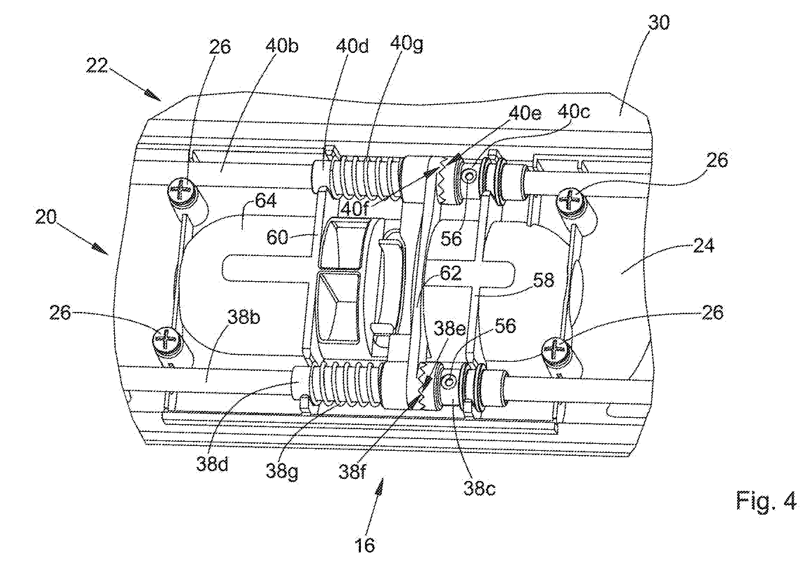

Eine von Hand lösbare Feststelleinrichtung 54 erlaubt die Arretierung der Zahnradantriebe 38 und 40 und damit des in den Gleitschienen 12 geführten Auszugsstabs 20 in einer gewünschten ausgezogenen Position. Der genaue Aufbau der Feststelleinrichtung 54 geht aus der Detailansicht in Fig. 4 hervor. Die Feststelleinrichtung 54 weist ein auf der Antriebswelle 38b bzw. 40b des jeweiligen Zahnradantriebs 38 bzw. 40 mittels zugehöriger Splinte 56 drehfest angebrachtes Stirnrad 38c bzw. 40c sowie eine entlang der Antriebswelle 38b bzw. 40b verschiebbare Arretierhülse 38d bzw. 40d auf. Ein einstückig an der Innenseite des Basisteils 24 ausgeformter Vorsprung 58 dient der drehbaren Lagerung des Stirnrads 38c bzw. 40c. Die Antriebswelle 38b bzw. 40b ist drehbar durch die Arretierhülse 38d bzw. 40d hindurchgeführt. Letztere umfasst eine stirnseitige Verzahnung 38e bzw. 40e, die komplementär zu einer Verzahnung 38f bzw. 40f des Stirnrads 38c bzw. 40c ausgebildet ist und unter der Wirkung einer mittels einer Druckfeder 38g bzw. 40g aufgebrachten Vorspannkraft mit der Verzahnung 38f bzw. 40f des Stirnrads 38c bzw. 40c derart in Eingriff steht, dass eine Drehung des Stirnrads 38c bzw. 40c und damit der Antriebswelle 38b bzw. 40b blockiert wird. Die Druckfeder 38g bzw. 40g stützt sich an einem einstückig an der Innenseite des Basisteils 24 ausgeformten weiteren Vorsprung 60 ab. Ein Betätigungselement 62 ermöglicht es, die Arretierhülse 38d bzw. 40d zum Lösen der Feststelleinrichtung 54 entgegen der Vorspannkraft der Druckfeder 38g bzw. 40g von Hand auszulenken und so die stirnseitige Verzahnung 38e bzw. 40e der Arretierhülse 38d bzw. 40d außer Eingriff mit der Verzahnung 38f bzw. 40f des Stirnrads 38c bzw. 40c zu bringen. In diesem Fall wird eine Drehung des Stirnrads 38c bzw. 40c und damit der Antriebswelle 38b bzw. 40b freigegeben, sodass sich der Auszugsstab 20 ungehindert entlang der Gleitschienen 12 verschieben lässt.

Im vorliegenden Fall sind beide Arretierhülsen 38d und 40d über das zu diesem Zweck brückenförmig ausgebildete Betätigungselement 62 miteinander verbunden. Das Betätigungselement 62 durchragt eine in dem Basisteil 24 des Auszugsstabs 20 ausgebildete Griffmulde 64, sodass dieses von außen mit der Hand zugänglich ist.

Um eine Beschädigung der Feststelleinrichtung 54 oder des Zahnradantriebs 38 bzw. 40 bei dem Versuch, die Auszugsstange 20 in arretiertem Zustand zu verschieben, zu vermeiden, ist die Feststelleinrichtung 54 als durchrastende Sicherheitskupplung ausgebildet. Zu diesem Zweck ist die stirnseitige Verzahnung 38e bzw. 40e der Arretierhülse 38d bzw. 40d derart geformt, dass diese bei Überschreiten eines durch die Vorspannkraft der Druckfeder 38g bzw. 40g bestimmten Ausrückmoments aus der Verzahnung 38f bzw. 40f des Stirnrads 38c bzw. 40c gehoben wird und dabei eine Drehung der Antriebswelle 38b bzw. 40b freigibt.

## Patentansprüche

1. Schattierungseinrichtung für eine verglaste Fahrzeugöffnung, mit einem in gegenüberliegenden Gleitschienen (12) geführten Auszugsstab (20) sowie einem an dem Auszugsstab (20) angebrachten Schattierungselement (22), das durch Verschieben des Auszugsstabs (20) entlang der Gleitschienen (12) zwischen einer zurückgezogenen Position und einer ausgezogenen Position verstellbar ist, wobei der Auszugsstab (20) zumindest einen Zahnradantrieb (38, 40) mit an gegenüberliegenden Enden des Auszugsstabs angeordneten Zahnrädern (38a, 40a) aufweist, die jeweils mit einer entlang der Gleitschienen (12) ausgebildeten Verzahnung (42) kämmen und wobei die Zahnräder (38a, 40a) drehfest miteinander verbunden sind, **dadurch gekennzeichnet, dass** der Auszugsstab (20) einen ersten Zahnradantrieb (38) und einen in Verstellrichtung des Auszugsstabs (20) beabstandet angeordneten zweiten Zahnradantrieb (40) aufweist.

2. Schattierungseinrichtung nach Anspruch 1, **dadurch gekennzeichnet, dass** die Zahnräder (38a, 40a) des zumindest einen Zahnradantriebs (38, 40) über eine in dem Auszugsstab (20) verlaufende durchgehende Antriebswelle (38b, 40b) drehfest miteinander verbunden sind.

3. Schattierungseinrichtung nach Anspruch 1 oder 2, **dadurch gekennzeichnet, dass** die Verzahnung (42) entlang einer Innenkante (48) einer von der Gleitschiene (12) umfassten Führungsnut (50) verläuft.

4. Schattierungseinrichtung nach einem der Ansprüche 1 bis 3, **dadurch gekennzeichnet, dass** diese als Sonnenschutzrollo (28) ausgebildet ist.

5. Schattierungseinrichtung nach einem der Ansprüche 1 bis 4, **dadurch gekennzeichnet, dass** eine von Hand lösbare Feststelleinrichtung (54) zur Arretierung des zumindest einen Zahnradantriebs (38, 40) vorhanden ist.

6. Schattierungseinrichtung nach Anspruch 5, **dadurch gekennzeichnet, dass** die Feststelleinrichtung (54) als durchrastende Sicherheitskupplung ausgebildet ist.

7. Fahrzeug, insbesondere landwirtschaftliches Nutzfahrzeug, mit einer Schattierungseinrichtung (10) nach einem der Ansprüche 1 bis 6.

## Claims

1. Shading device for a glazed vehicle opening, having a pull-out bar (20), which is guided in opposite slide rails (12), and a shading element (22), which is mounted on the pull-out bar (20) and which can be adjusted between a retracted position and an extended position by sliding the pull-out bar (20) along the slide rails (12), wherein the pull-out bar (20) has at least one toothed wheel drive (38, 40) having toothed wheels (38a, 40a), which are arranged at opposite ends of the pull-out bar and which each mesh with a set of teeth (42) formed along the slide rails (12), and wherein the toothed wheels (38a, 40a) are connected to one another for conjoint rotation, **characterized in that** the pull-out bar (20) has a first toothed wheel drive (38) and a second toothed wheel drive (40), which is arranged at a spacing in the direction of adjustment of the pull-out bar (20).

2. Shading device according to Claim 1, **characterized in that** the toothed wheels (38a, 40a) of the at least one toothed wheel drive (38, 40) are connected to one another for conjoint rotation by a continuous drive shaft (38b, 40b) extending in the pull-out bar (20).

3. Shading device according to Claim 1 or 2, **characterized in that** the set of teeth (42) extends along an inner edge (48) of a guide groove (50) surrounded by the slide rail (12).

4. Shading device according to one of Claims 1 to 3, **characterized in that** the device is designed as a roller sun blind (28).

5. Shading device according to one of Claims 1 to 4, **characterized in that** there is a manually releasable fixing device (54) for the purpose of locking the at least one toothed wheel drive (38, 40).

6. Shading device according to Claim 5, **characterized in that** the fixing device (54) is designed as a slip-and-latch safety clutch.

7. Vehicle, in particular agricultural vehicle, having a shading device (10) according to one of Claims 1 to 6.

## Revendications

1. Dispositif d'ombrage pour une ouverture de véhicule vitrée, comprenant une barre de traction (20) guidée dans des rails de glissement opposés (12) ainsi qu'un élément d'ombrage (22) monté sur la barre de traction (20), qui peut être déplacé par déplacement de la barre de traction (20) le long des rails de glissement (12) entre une position rentrée et une position sortie, la barre de traction (20) présentant au moins un entraînement à roue dentée (38, 40) avec des roues dentées (38a, 40a) disposées à des extrémités opposées de la barre de traction, qui s'engrènent à chaque fois avec une denture (42) réalisée le long des rails de glissement (12), et les roues dentées (38a, 40a) étant connectées de manière solidaire en rotation les unes aux autres, **caractérisé en ce que** la barre de traction (20) présente un premier entraînement à roue dentée (38) et un deuxième entraînement à roue dentée (40) disposé de manière espacée dans la direction de déplacement de la barre de traction (20).

2. Dispositif d'ombrage selon la revendication 1, **caractérisé en ce que** les roues dentées (38a, 40a) de l'au moins un entraînement à roue dentée (38, 40) sont connectées les unes aux autres de manière solidaire en rotation par le biais d'un arbre d'entraînement (38b, 40b) continu, s'étendant dans la barre de traction (20).

3. Dispositif d'ombrage selon la revendication 1 ou 2, **caractérisé en ce que** la denture (42) s'étend le long d'une arête intérieure (48) d'une rainure de guidage (50) comprise dans le rail de glissement (12).

4. Dispositif d'ombrage selon l'une quelconque des revendications 1 à 3, **caractérisé en ce que** celui-ci est réalisé sous forme de store déroulant de pare-soleil (28).

5. Dispositif d'ombrage selon l'une quelconque des revendications 1 à 4, **caractérisé en ce qu'**un dispositif de fixation (54) pouvant être libéré manuellement est prévu pour bloquer l'au moins un entraînement à roue dentée (38, 40).

6. Dispositif d'ombrage selon la revendication 5, **caractérisé en ce que** le dispositif de fixation (54) est réalisé sous forme d'accouplement de sécurité à encliquetage.

7. Véhicule, en particulier véhicule utilitaire agricole comprenant un dispositif d'ombrage (10) selon l'une quelconque des revendications 1 à 6.
